(19) Europäisches Patentamt
European Patent Office
Office européen des brevets

(11) EP 3 786 992 A1

(12) **EUROPEAN PATENT APPLICATION**
published in accordance with Art. 153(4) EPC

(43) Date of publication:
**03.03.2021 Bulletin 2021/09**

(21) Application number: **19793046.4**

(22) Date of filing: **25.04.2019**

(51) Int Cl.:
***H01G 11/28*** *(2013.01)* ***H01G 11/06*** *(2013.01)*
***H01G 11/48*** *(2013.01)* ***H01M 4/137*** *(2010.01)*
***H01M 4/60*** *(2006.01)* ***H01M 4/66*** *(2006.01)*

(86) International application number:
**PCT/JP2019/017795**

(87) International publication number:
**WO 2019/208734 (31.10.2019 Gazette 2019/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.04.2018 JP 2018084706**
**30.10.2018 JP 2018204261**
**29.03.2019 JP 2019065608**

(71) Applicant: **NITTO DENKO CORPORATION**
**Ibaraki-shi**
**Osaka 567-8680 (JP)**

(72) Inventors:
- **YANO Masaya**
**Ibaraki-shi, Osaka 567-8680 (JP)**
- **TAKE Hiroyoshi**
**Ibaraki-shi, Osaka 567-8680 (JP)**
- **GOTO Chisato**
**Ibaraki-shi, Osaka 567-8680 (JP)**
- **YAMAUCHI Kengo**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

# (54) POSITIVE ELECTRODE FOR ELECTRICITY STORAGE DEVICES, AND ELECTRICITY STORAGE DEVICE

(57) A positive electrode 1 for a power storage device includes: an active material layer 10; a current collector 20; and an electrically conductive layer 30. The active material layer 10 includes an electrochemically active polymer 12 and an electrically conductive agent 14. The electrically conductive layer 30 is disposed between the active material layer 10 and the current collector 20 and is in contact with the active material layer 10 and the current collector 20. The electrically conductive layer 30 includes electrically conductive particles 32 and a binder 35 in contact with outer surfaces of the electrically conductive particles 32. The content of the binder in the electrically conductive layer 30 is 3% or more on a mass basis.

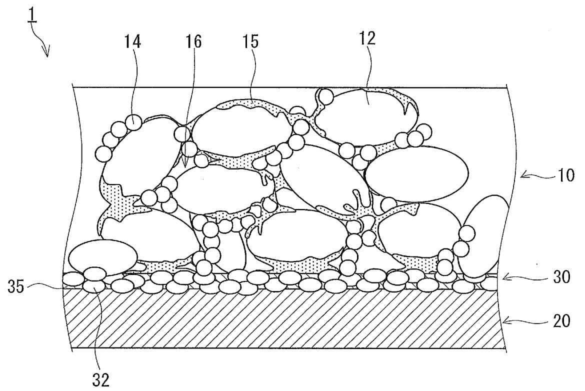


FIG.1

EP 3 786 992 A1

## Description

TECHNICAL FIELD

The present invention relates to a positive electrode for a power storage device and a power storage device.

BACKGROUND ART

A technology, called micro-hybrid, for storing regenerative energy resulting from braking an automobile as electrical energy has been attracting attention in recent years. In micro-hybrid technology, power storage devices such as electrical double layer capacitors and lithium-ion capacitors need to be charged and discharged rapidly. Electrochemically active polymers such as polyaniline are known to be used as active materials for such power storage devices.

Patent Literature 1, for example, describes a positive electrode for a power storage device that has excellent performance in rapid charge-discharge. This positive electrode includes: an active material including at least one of polyaniline and a polyaniline derivative; an electrically conductive agent; and a binder. The proportion of an oxidant of polyaniline in the active material is 45 mass% or more in the whole polyaniline active material. The sum of a polarity term and a hydrogen bonding term of Hansen solubility parameters of the binder is 20 $MPa^{1/2}$ or less. In Patent Literature 1, a slurry is applied onto a current collector layer such as an aluminum foil to produce a positive electrode.

CITATION LIST

Patent Literature

Patent Literature 1: JP 2018-026341 A

SUMMARY OF INVENTION

Technical Problem

The technique described in Patent Literature 1 leaves room for improvement in terms of increasing the durability of a power storage device. Therefore, the present invention provides a positive electrode for a power storage device, the positive electrode including an electrochemically active polymer as an active material and advantageously improves the durability of a power storage device. The present invention also provides a power storage device including such a positive electrode.

Solution to Problem

The present invention provides a positive electrode for a power storage device, including:

an active material layer including an electrochemically active polymer and an electrically conductive agent;
a current collector; and
an electrically conductive layer disposed between the active material layer and the current collector and in contact with the active material layer and the current collector, wherein
the electrically conductive layer includes electrically conductive particles and a binder in contact with outer surfaces of the electrically conductive particles, and
the content of the binder in the electrically conductive layer is 3% or more on a mass basis.

The present invention also provides a power storage device, including:

an electrolyte layer;
a negative electrode disposed in contact with a first principal surface of the electrolyte layer; and
the above positive electrode for a power storage device, the positive electrode being disposed in contact with a second principal surface of the electrolyte layer.

Advantageous Effects of Invention

The above positive electrode for a power storage device advantageously improves the durability of a power storage device. The above power storage device can exhibit good durability.

BRIEF DESCRIPTION OF DRAWINGS

FIG. 1 is a cross-sectional view schematically showing an example of a positive electrode for a power storage device according to the present invention.

FIG. 2 is a cross-sectional view schematically showing an example of a power storage device according to the present invention.

DESCRIPTION OF EMBODIMENTS

Activated carbon is commonly used as an active material in a positive electrode of a power storage device such as a lithium-ion capacitor. Activated carbon has an extremely large specific surface area. Power storage devices including a positive electrode including activated carbon are charged and discharged by physical adsorption and desorption of ions on the surface of activated carbon. Reactions for charge and discharge proceed very fast in such power storage devices, and the power storage devices can be charged and discharged rapidly.

However, such power storage devices are charged by means of physical adsorption of ions on the surface of activated carbon. An increase in specific surface area of activated carbon increases the mass energy density but does not greatly improve the volume energy density because the mass decreases with increasing specific surface area. The present inventors thought that it was advantageous to use, as described in Patent Literature 1, an electrochemically active polymer such as polyaniline as an active material of a positive electrode of a power storage device in terms of achieving rapid charge and discharge and increasing the energy density of a power storage device. Thus, the present inventors measured AC impedance using a symmetric cell obtained by combining positive electrodes in which an active material layer including an electrochemically active polymer such as polyaniline as an active material was in direct contact with a current collector such as an aluminum foil. The measurement result unexpectedly revealed that impedances of the positive electrodes were high in a high-frequency region (e.g., a region around 100 kHz). This phenomenon does not occur with a positive electrode including activated carbon as an active material, and is specific to a positive electrode including an electrochemically active polymer as an active material. It is undesirable for a positive electrode to have such a property in terms of improving the properties related to rapid charge and discharge of a power storage device. The present inventors thus made intensive studies to discover a structure of a positive electrode less likely to have a high impedance in a high-frequency region. As a result, the present inventors have found out that a positive electrode less likely to have a high impedance in a high-frequency region can be obtained by interposing a certain electrically conductive layer between a current collector and an active material layer including electrochemically active polymer particles and an electrically conductive agent. Moreover, the present inventors have found out that a power storage device produced with such a positive electrode can exhibit good properties related to rapid charge and discharge.

The present inventors have additionally found out that it is advantageous in terms of improving the durability of a power storage device that when the electrochemically active polymer is included as an active material in the positive electrode, the content of a binder in the electrically conductive layer disposed between the active material layer and the current collector satisfies a given relation.

Hereinafter, embodiments of the present invention will be described with reference to the drawings. The present invention is not limited to the following embodiments.

As shown in FIG. 1, a positive electrode 1 for a power storage device includes an active material layer 10, a current collector 20, and an electrically conductive layer 30. The active material layer 10 includes an electrochemically active polymer 12 and an electrically conductive agent 14. The electrically conductive layer 30 is disposed between the active material layer 10 and the current collector 20 and is in contact with the active material layer 10 and the current collector 20. The electrically conductive layer 30 includes electrically conductive particles 32 and a binder 35 in contact with outer surfaces of the electrically conductive particles 32. The content of the binder 35 in the electrically conductive layer 30 is 3% or more on a mass basis.

Compared to activated carbon, electrochemically active polymer particles show a great dimensional change caused by charging and discharging a power storage device. Therefore, it is thought that if an active material layer including electrochemically active polymer particles as an active material and a current collector are in direct contact, a great dimensional change which the electrochemically active polymer particles undergo and which is caused by charging and discharging a power storage device affects the interface between the active material layer and the current collector. On the other hand, because the electrically conductive layer 30 includes the electrically conductive particles 32 and the binder 35, the effect of such a great dimensional change which electrochemically active polymer particles undergo and which is caused by charging and discharging a power storage device is easily weakened by the electrically conductive layer 30. Therefore, the properties related to rapid charge and discharge of a power storage device is likely to be improved with the use of the positive electrode 1. Additionally, the content of the binder 35 in the electrically conductive layer 30

in the above range makes it likely that a power storage device manufactured with the positive electrode 1 for a power storage device exhibits high durability. It is thought that when the content of the binder 35 in the electrically conductive layer 30 is in the above range, direct contact of the polymer 12 with the current collector 20 can be reduced. This makes it possible to prevent the current collector 20 from deteriorating due to contact between the polymer 12 and the current collector 20, and it is consequently thought that the positive electrode 1 for a power storage device is likely to exhibit high durability. As described above, the polymer 12 undergoes a great dimensional change caused by charging and discharging a power storage device. It is thought that the content of the binder 35 in the electrically conductive layer 30 in the above range makes it difficult for the electrically conductive layer 30 to be separated from the active material layer 10 and the current collector 20 by a great dimensional change which the polymer 12 undergoes and which is caused by charging and discharging a power storage device.

The content of the binder 35 in the electrically conductive layer 30 may be 3% or more or 4% or more on a mass basis. In this case, it is ensured that a power storage device is likely to exhibit high durability.

The content of the binder 35 in the electrically conductive layer 30 is, for example, 10% or less on a mass basis. In this case, the density of the electrically conductive particles 32 in the electrically conductive layer 30 increases and the internal resistance of the positive electrode 1 is likely to decrease.

The content of the binder 35 in the electrically conductive layer 30 may be 10% or less or 6% or less on a mass basis.

The electrically conductive particles 32 include, for example, a carbon material. In this case, the production cost of the positive electrode 1 can be kept low. The carbon material forming the electrically conductive particles 32 is, for example, graphite.

Typically, the binder 35 binds the electrically conductive particles 32. For example, a portion of the outer surface of each of the electrically conductive particles 32 is in contact with the active material layer 10, and another portion of the outer surface of each of the electrically conductive particles 32 is in contact with the current collector 20.

The binder 35 is not particularly limited as long as the binder 35 can be in contact with the outer surfaces of the electrically conductive particles 32 to bind the electrically conductive particles 32. The binder 35 is, for example, a polymer such as carboxymethyl cellulose.

The binder 35 includes, for example, at least one selected from the group consisting of methylcellulose, hydroxyethyl cellulose, polyethylene oxide, carboxymethyl cellulose, their derivatives, their salts, a polyolefin, natural rubber, a synthetic rubber, and a thermoplastic elastomer. In this case, the adhesion between the electrically conductive layer 30 and the active material layer 10 or the current collector 20 is likely to increase.

For example, styrene-butadiene copolymer, acrylonitrile-butadiene copolymer, or methyl methacrylate-butadiene copolymer can be used as the synthetic rubber or the thermoplastic elastomer.

The binder 35 includes, for example, at least one selected from the group consisting of a polyolefin, carboxymethyl cellulose, and styrene-butadiene copolymer. In this case, it is ensured that the adhesion between the electrically conductive layer 30 and the active material layer 10 or the current collector 20 is likely to increase.

The binder 35 desirably includes at least one of carboxymethyl cellulose and styrene-butadiene copolymer. In this case, the adhesion between the electrically conductive layer 30 and the active material layer 10 is likely to increase. In particular, in the case where a binder 15 to be described later of the active material layer 10 includes a given component, the adhesion between the electrically conductive layer 30 and the active material layer 10 is likely to increase.

The thickness of the electrically conductive layer 30 is measured at 10 points spaced apart at 2 pm intervals along a boundary between the current collector 20 and the electrically conductive layer 30 on a cross-section of the positive electrode 1 for a power storage device. The cross-section is perpendicular to a principal surface of the current collector 20, and the electrically conductive layer 30 is in contact with the principal surface. The average thickness of the electrically conductive layer 30 determined by this measurement is, for example, 0.5 to 3.0 pm. The average thickness of the electrically conductive layer 30 is expressed as an arithmetic average. The thickness of the electrically conductive layer 30 can be measured, for example, by observing a cross-section of the electrically conductive layer 30 using a scanning electron microscope (SEM). The thickness of the electrically conductive layer 30 may be measured before or after the active material layer 10 is formed in the process of manufacturing the positive electrode 1.

The average thickness of the electrically conductive layer 30 may be 0.5 pm or more or 1.0 pm or more. In this case, it is ensured that a power storage device is likely to exhibit high durability. The average thickness of the electrically conductive layer 30 may be 3.0 pm or less or 1.5 pm or less. In this case, the positive electrode 1 can be prevented from increasing in thickness.

The smallest thickness of the electrically conductive layer 30 measured at the above 10 points is, for example, 0.1 pm or more. In this case, it is ensured that direct contact of the polymer 12 with the current collector 20 can be reduced and a power storage device is likely to exhibit high durability. The smallest thickness of the electrically conductive layer 30 measured at the above 10 points may be 0.2 pm or more, 0.3 pm or more, or 0.5 pm or more. In this case, it is ensured that a power storage device is likely to exhibit high durability.

The contact angle of a water drop on a surface of the electrically conductive layer 30 is, for example, 100° or

less. The contact angle of a water drop on a surface of the electrically conductive layer 30 can be measured, for example, according to the sessile drop method in Japanese Industrial Standards (JIS) R 3257:1999 before formation of the active material layer 10. The temperature at which the contact angle of a water drop is measured is 25°C. The contact angle of a water drop may be measured, for example, on a surface of the electrically conductive layer 30, the surface being exposed, after formation of the active material layer 10, by removing at least a portion of the active material layer 10, for example, by grinding or cutting. Alternatively, the contact angle of a water drop may be measured on a surface of the electrically conductive layer 30, the surface being exposed by removing at least a portion of the current collector 20, for example, by grinding or cutting.

A small contact angle of a water drop on a principal surface of the electrically conductive layer 30 is advantageous in terms of increasing the adhesion between the electrically conductive layer 30 and the active material layer 10. The contact angle of a water drop on a principal surface of the electrically conductive layer 30 is desirably 90° or less, more desirably 80° or less, and even more desirably 70° or less. The contact angle of a water drop on a principal surface of the electrically conductive layer 30 is, for example, 10° or more.

A peel strength P measured for the active material layer 10 with respect to the electrically conductive layer 30 by Surface And Interfacial Cutting Analysis System (SAICAS) is, for example, 0.15 kN/m or more. The peel strength P is, for example, determined by the following equation (1). The measurement mode of SAICAS is a constant speed mode. The cutting speed is 10 μm/s. FH represents a horizontal cutting stress [N] applied by horizontally moving a diamond cutting blade (manufactured by DAIPLA WINTES CO., LTD., rake angle: 10°) of SAICAS along the interface between the active material layer 10 and the electrically conductive layer 30. W represents a blade width [m] of the cutting blade of SAICAS. SAICAS is a registered trademark of DAIPLA WINTES CO., LTD.

$$P = FH/W \qquad (1)$$

The larger the peel strength P is, the higher the adhesion between the electrically conductive layer 30 and the active material layer 10 is. The peel strength P is desirably 0.15 kN/m or more, more desirably 0.17 kN/m or more, and even more desirably 0.23 kN/m or more.

The polymer 12 exists in the form of, for example, particles. In this case, the average particle diameter of the polymer 12 is not limited to a particular value. The polymer 12 has an average particle diameter of, for example, more than 0.5 pm and 20 pm or less. The average particle diameter of the polymer 12 can be determined, for example, by observing 50 or more particles of the polymer 12 using an electron microscope such as a SEM and measuring the maximum diameters of the 50 or more particles of the polymer 12. Alternatively, the average particle diameter of the polymer 12 may be determined using a particle image analyzer which takes an image of a particle shape using a microscope and examines the particle shape by image analysis. Herein, the term "average particle diameter" refers to a median diameter (D50). A median diameter has a particle diameter value separating particles having a particle diameter larger than the value and particles having a particle diameter smaller than the value equally in number. The polymer 12 may have an average particle diameter of 0.5 pm or less.

The content of the polymer 12 in the active material layer 10 is, for example, 1% or more, desirably 5% or more, more desirably 20% or more, even more desirably 40% or more, and particularly desirably 60% or more on a mass basis. In this case, the energy density in a power storage device is likely to increase.

The electrochemically active polymer 12 includes, for example, at least one of polyaniline and a polyaniline derivative. In this case, improvement of the properties related to rapid charge and discharge of a power storage device can be ensured. Moreover, the energy density in a power storage device is likely to increase. The polyaniline and the polyaniline derivative may be collectively referred to as "polyaniline compound".

The polyaniline can be obtained typically by electrolytic polymerization or chemical oxidative polymerization of aniline. The polyaniline derivative can be obtained typically by electrolytic polymerization or chemical oxidative polymerization of an aniline derivative. The aniline derivative has, for example, at least one of substituents such as alkyl, alkenyl, alkoxy, aryl, aryloxy, alkyl aryl, aryl alkyl, and alkoxyalkyl groups at a position other than the 4-position of aniline. Examples of the aniline derivative may include (i) o-substituted anilines such as o-methylaniline, o-ethylaniline, o-phenylaniline, o-methoxyaniline, and o-ethoxyaniline and (ii) m-substituted anilines such as m-methylaniline, m-ethylaniline, m-methoxyaniline, m-ethoxyaniline, and m-phenylaniline. For synthesis of the polyaniline derivative, one of the aniline derivatives may be used alone, or two or more of the aniline derivatives may be used in combination.

The polyaniline compound is sometimes doped with a dopant such as a protonic acid in order to impart electrical conductivity. As for the positive electrode 1, the polyaniline and the polyaniline derivative included in the electrochemically active polymer 12 are desirably in a dedoped state when the positive electrode 1 is produced. Specifically, the polyaniline and the polyaniline derivative which can include a dopant such as a protonic acid and which are included in the polymer 12 are in a dedoped state. In this case, the polymer 12 can be appropriately dispersed in the active material layer 10

and the energy density of a power storage device is likely to increase. This is because, the polymer 12 including the dedoped polyaniline or the like is well dispersed in a slurry for forming the active material layer 10 even when the dispersion medium of the slurry is water. On the other hand, it can be difficult to disperse doped polyaniline particles well when water is used as a dispersion medium.

The positive electrode 1 is desirably in a dedoped state at the time of assembling a power storage device. It should be noted that the polymer 12 is in a doped state in the positive electrode 1 when a power storage device is in a charged state. It is conceivable that a power storage device is assembled by combining a chemically pre-doped positive electrode and an uncharged negative electrode. In this case, only an electrochemically active polymer not chemically doped in the positive electrode contributes to charging of the power storage device at an initial charging. Thus, the charging capacity of the power storage device is significantly low at the initial charging. This is unfavorable for the power storage device. It is also conceivable that a power storage device is assembled by combining a chemically pre-doped positive electrode and a negative electrode such as a lithium-pre-doped negative electrode. In this case, although discharge can be carried out immediately after the assembling of the power storage device, a chemically introduced dopant is unsuitable for electrochemical doping and dedoping and decreases the capacity of the power storage device. Therefore, a desirable power storage device is likely to be unachievable. It should be noted that even an electrochemically active polymer that is in a dedoped state at the time of producing a positive electrode or assembling a power storage device is electrochemically doped when the power storage device has been assembled and starts to be charged. The power storage device can be used after the electrochemically active polymer is repeatedly doped and dedoped thereafter.

The polyaniline and the polyaniline derivative included in the electrochemically active polymer 12 include, for example, an oxidant of the polyaniline in an amount of 35 to 60% on a mass basis. In this case, the polymer 12 has good preservability and can exhibit desirable properties as an active material of the positive electrode. The chemical structure of an oxidant Ox and a reductant Red of the polyaniline is shown in the following formula (a). In the formula (a), x and y are each an integer of 0 or larger.

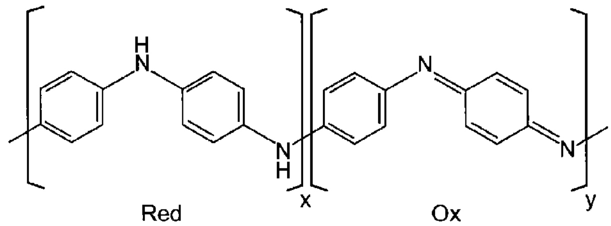

(a)

For example, the amount of a reducing agent such as phenylhydrazine or an oxidizing agent such as manganese dioxide is stoichiometrically adjusted with respect to the polyaniline so that the content of the oxidant in the polyaniline compound will be in the given range (35 to 60% on a mass basis). An example of a reduction reaction of the polyaniline using phenylhydrazine is represented by the following equation (b).

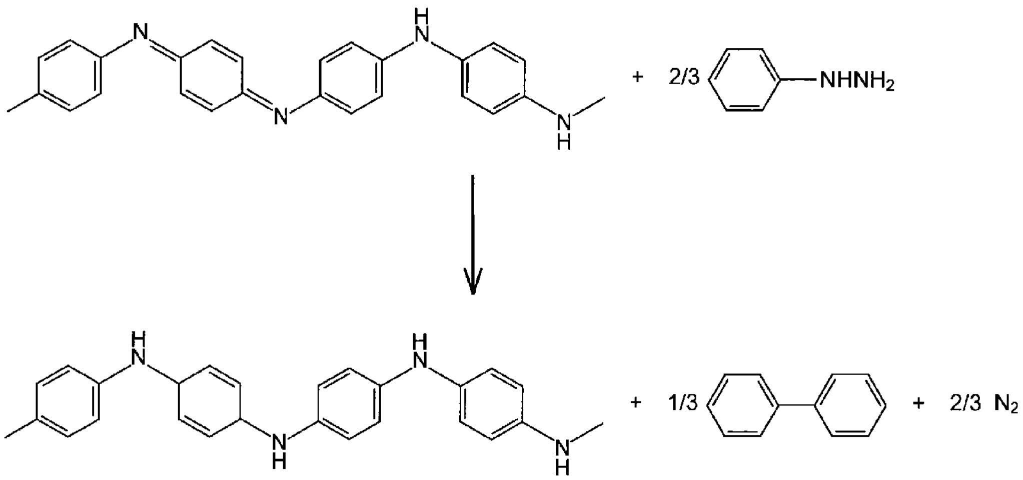

(b)

The content of the oxidant in the polyaniline compound included in the electrochemically active polymer 12 can be determined, for example, from a solid-state $^{13}C$ NMR spectrum. The content of the oxidant in the polyaniline compound included in the polymer 12 can also be obtained from an oxidation index expressed in a ratio A640/A340 between an

absorbance A640 at an absorption maximum at around 640 nm and an absorbance A340 at an absorption maximum at around 340 nm in an electron spectrum obtained with a spectrophotometer. The content of the oxidant (the proportion of the oxidant) in the polyaniline compound included in the polymer 12 can be determined, for example, by a method described in JP 2018-026341 A, the paragraphs 0040 to 0051.

The electrically conductive agent 14 included in the active material layer 10 is typically made of an electrically conductive material having properties that does not vary at voltage applied for charging and discharging a power storage device. The electrically conductive agent 14 can be an electrically conductive carbon material or a metal material. Examples of the electrically conductive carbon material include electrically conductive carbon black such as acetylene black and ketjen black and fibrous carbon materials such as carbon fibers and carbon nanotubes. The electrically conductive carbon material is desirably electrically conductive carbon black.

The content of the electrically conductive agent 14 in the active material layer 10 is, for example, 1 to 30%, desirably 4 to 25%, and more desirably 4 to 19% on a mass basis. In this case, the content of the electrically conductive agent is reduced and activation of the polymer 12 can be ensured. Consequently, the energy density of a power storage device is likely to increase.

As shown in FIG. 1, the active material layer 10 further includes, for example, a binder 15. The binder 15 includes, for example, an elastomer. The elastomer may be natural rubber, a synthetic rubber, or a thermoplastic elastomer. The binder 15 is typically in contact with the outer surface of the polymer 12 and the outer surface of the electrically conductive agent 14. The binder 15 binds the electrochemically active polymer 12 and the electrically conductive agent 14. The binder 15 binds the polymer 12 and the electrically conductive agent 14. As shown in FIG. 1, the active material layer 10 has, for example, a void 16. The void 16 is arranged, for example, in such a manner that a string of the voids 16 extends from one principal surface of the active material layer 10 to the other principal surface thereof. In a power storage device manufactured with the positive electrode 1, the void 16 is impregnated with an electrolyte solution. When the binder 15 includes the elastomer, no large stress is generated by a dimensional change which the electrochemically active polymer particles undergo and which is caused by charging and discharging a power storage device and the binder 15 easily deforms. This is thought to be likely to improve the properties related to rapid charge and discharge of a power storage device.

The binder 15 includes, for example, a rubber material. In this case, the rubber material can be, for example, styrene-butadiene copolymer, acrylonitrile-butadiene copolymer, or methyl methacrylate-butadiene copolymer.

The sum of a polarity term and a hydrogen bonding term of Hansen solubility parameters of the binder 15 is, for example, 20 $MPa^{1/2}$ or less. In this case, the affinity between the binder 15 and the polymer 12 is high and the electrically conductive agent 14 is likely to be in contact with the polymer 12. Moreover, the adhesion between the active material layer 10 and the electrically conductive layer 30 is likely to increase. Calculation for determining the Hansen solubility parameters can be carried out according to a method described in Charles M. Hansen, Hansen Solubility Parameters: A Users Handbook (CRC Press, 2007). Additionally, the Hansen solubility parameters can be calculated from a chemical structure using computer software, Hansen Solubility Parameters in Practice (HSPiP). The sum of a polarity term and a hydrogen bonding term of Hansen solubility parameters of a binder composed of a composite material can be determined by adding the products of Hansen solubility parameters of components composing the binder and the composition ratio between the components on a mass basis. The sum of the polarity term and the hydrogen bonding term of the Hansen solubility parameters of the binder 15 is desirably 19 $MPa^{1/2}$ or less, more desirably 12 $MPa^{1/2}$ or less, and even more desirably 8 $MPa^{1/2}$ or less.

When the sum of the polarity term and the hydrogen bonding term of the Hansen solubility parameters of the binder 15 is 20 $MPa^{1/2}$ or less and the binder 35 of the electrically conductive layer 30 particularly includes a given component, the affinity between the binder 15 and the binder 35 is high and the adhesion between the active material layer 10 and the electrically conductive layer 30 is likely to increase. In this case, examples of the given component can include methylcellulose, hydroxyethyl cellulose, polyethylene oxide, carboxymethyl cellulose, their derivatives, their salts, and rubber materials such as styrene-butadiene copolymer. The given component is desirably carboxymethyl cellulose or styrene-butadiene copolymer.

The content of the binder 15 in the active material layer 10 is, for example, 1 to 30%, desirably 4 to 25%, and more desirably 4 to 18% on a mass basis. In this case, the content of the binder 15 is reduced and the polymer 12 can be appropriately dispersed in the active material layer 10. Consequently, the properties related to rapid charge and discharge of a power storage device can increase and the energy density of a power storage device is likely to increase.

The active material layer 10 may include an active material other than the electrochemically active polymer 12, if necessary. The active material other than the polymer 12 is, for example, a carbon material such as activated carbon. Activated carbon can be alkaline-activated carbon, steam-activated carbon, gas-activated carbon, or zinc chloride-activated carbon.

The active material layer 10 may further include an additive such as a thickener, if necessary. Examples of the thickener include methylcellulose, hydroxyethyl cellulose, polyethylene oxide, carboxymethyl cellulose, their derivatives, and their salts. Among these, carboxyl methylcellulose, its derivative, or its salt is desirably used as the thickener.

The content of the thickener in the active material layer 10 is, for example, 1 to 20%, desirably 1 to 10%, and more desirably 1 to 8% on a mass basis.

The current collector 20 is, for example, a foil or mesh made of a metal material such as nickel, aluminum, or stainless steel.

An exemplary method for manufacturing the positive electrode 1 will be described. First, the current collector 20 is prepared, and the electrically conductive layer 30 is formed on a principal surface of the current collector 20. The electrically conductive layer 30 is formed, for example, using the given raw materials by coating, sputtering, vapor deposition, ion plating, or CVD. The electrically conductive layer 30 desirably can be formed by dispersing the electrically conductive particles 32 and the binder 35 in a dispersion medium to prepare a slurry, applying the slurry to a principal surface of the current collector 20 to form a coating film, and drying the coating film. The active material layer 10 can be formed thereafter by dispersing the electrochemically active polymer 12, the electrically conductive agent 14, and the binder 15 in a dispersion medium to prepare a slurry, applying the slurry to the surface of the electrically conductive layer 30 to form a coating film, and drying the coating film. The positive electrode 1 can be produced in this manner. The active material other than the polymer 12 and an additive such as the thickener are added, if necessary, to the slurry for forming the active material layer 10.

As shown in FIG. 2, a power storage device 5 can be produced with the positive electrode 1. The power storage device 5 includes an electrolyte layer 3, a negative electrode 2, and the positive electrode 1. The negative electrode 2 is disposed in contact with a first principal surface of the electrolyte layer 3. The positive electrode 1 is disposed in contact with a second principal surface of the electrolyte layer 3. The active material layer 10 of the positive electrode 1 is in contact with the second principal surface of the electrolyte layer 3. The electrolyte layer 3 is disposed between the positive electrode 1 and the negative electrode 2. Including the positive electrode 1, the power storage device 5 can exhibit the good properties related to rapid charge and discharge.

The electrolyte layer 3 is composed of an electrolyte. The electrolyte layer 3 is, for example, a sheet including a separator impregnated with an electrolyte solution or a sheet made of a solid electrolyte. When the electrolyte layer 3 is a sheet made of a solid electrolyte, the electrolyte layer 3 may double as a separator.

The electrolyte includes a solute and, if necessary, a solvent and an additive. In this case, the solute is, for example, a combination of a metal ion such as a lithium ion and a given counterion thereof. The counterion is, for example, a sulfonic acid ion, a perchloric acid ion, a tetrafluoroboric acid ion, a hexafluorophosphoric acid ion, a hexafluoroarsenic ion, a bis(trifluoromethanesulfonyl)imide ion, a bis(pentafluoroethanesulfonyl)imide ion, or a halogen ion. Specific examples of the electrolyte include $LiCF_3SO_3$, $LiClO_4$, $LiBF_4$, $LiPF_6$, $LiAsF_6$, $LiN(SO_2CF_3)_2$, $LiN(SO_2C_2F_5)$, $LiN(SO_2F)_2$, and LiCl.

Examples of the solvent in the electrolyte include non-aqueous solvents (organic solvents) such as carbonate compounds, nitrile compounds, amide compounds, and ether compounds. Specific examples of the solvent include ethylene carbonate, propylene carbonate, butylene carbonate, dimethyl carbonate, diethyl carbonate, ethyl methyl carbonate, acetonitrile, propionitrile, N,N'-dimethylacetamide, N-methyl-2-pyrrolidone, dimethoxyethane, diethoxyethane, and $\gamma$-butyrolactone. As the solvent in the electrolyte, one of the solvents may be used alone, or two or more of the solvents may be used in combination. A solution containing the solute dissolved in the solvent may be called "electrolyte solution".

The electrolyte solution may include an additive, if necessary. The additive is, for example, vinylene carbonate or fluoroethylene carbonate.

The negative electrode 2 includes, for example, an active material layer 60 and a current collector 70. The active material layer 60 includes a negative electrode active material. The negative electrode active material is a metal or a material allowing insertion and desorption of an ion thereinto and therefrom. A metal lithium, a carbon material allowing insertion and desorption of a lithium ion thereinto and therefrom by an oxidation-reduction reaction, transition metal oxides, silicon, and tin are desirably used as the negative electrode active material. The active material layer 60 is in contact with the first principal surface of the electrolyte layer 3.

The carbon material allowing insertion and desorption a lithium ion thereinto and therefrom is, for example, (i) activated carbon, (ii) coke, (iii) pitch, (iv) a baked product of a phenolic resin, a polyimide, or cellulose, (v) artificial graphite, (vi) natural graphite, (vii) hard carbon, or (vii) soft carbon.

The carbon material allowing insertion and desorption of a lithium ion thereinto and therefrom is preferably used as a main component of the negative electrode. The term "main component" as used herein refers to a component whose content is highest on a mass basis.

The current collector 70 is, for example, a foil or mesh made of a metal material such as nickel, aluminum, stainless steel, or copper.

A lithium-pre-doped negative electrode obtained by pre-doping a carbon material such as graphite, hard carbon, or soft carbon with lithium ions may be used as the negative electrode 2.

In the power storage device 5, a separator is typically disposed between the positive electrode 1 and the negative electrode 2. The separator prevents an electrical short circuit between the positive electrode 1 and the negative

electrode 2. The separator is, for example, a porous sheet electrochemically stable and having high ion permeability, desirable mechanical strength, and insulation properties. The material of the separator is desirably (i) paper, (ii) non-woven fabric, (iii) a porous film made of resin such as polypropylene, polyethylene, or a polyimide.

An exemplary method for manufacturing the power storage device 5 will be described. The separator is disposed between the positive electrode 1 and the negative electrode 2 to obtain a laminate. This laminate is put in a package made of an aluminum laminated film, followed by vacuum drying. Next, an electrolyte solution is introduced into the vacuum-dried package, which is then sealed. The power storage device 5 can thus be produced. The process of manufacturing the power storage device 5 including, for example, the introduction of the electrolyte solution into the package is desirably carried out using a glove box in an inert gas atmosphere such as ultrapure argon gas.

The power storage device 5 may be produced in the shape of a film, a sheet, a rectangle, a cylinder, a button, or the like using a package other than a package made of an aluminum laminated film.

EXAMPLES

Hereinafter, the present invention will be described in more detail by Examples. The present invention is not limited to Examples described below.

<Example 1>

84.0 g of an aqueous tetrafluoroboric acid solution (special grade reagent, manufactured by Wako Pure Chemical Industries, Ltd.) (amount of substance of tetrafluoroboric acid: 0.402 mol) having a concentration of 42 mass% was added to a glass beaker containing 138 g of ion-exchange water. To the resulting mixture was further added 10.0 g (0.107 mol) of aniline under stirring with a magnetic stirrer. Immediately after the addition of aniline to the aqueous tetrafluoroboric acid solution, aniline was dispersed in the aqueous tetrafluoroboric acid solution in the form of oily liquid drops. Then, aniline was dissolved in water in several minutes, and a homogeneous transparent aqueous solution was obtained. The aqueous solution thus obtained was cooled to -4°C or lower using a constant-temperature chamber. Next, 11.63 g (0.134 mol) of a manganese dioxide powder (1st grade reagent, manufactured by Wako Pure Chemical Industries, Ltd.) as an oxidizing agent was added to the aqueous solution in such small batches that the temperature of the mixture in the beaker did not exceed -1°C. By the addition of the oxidizing agent to the aqueous solution, the aqueous solution immediately turned blackish green. The aqueous solution was then kept stirred for a while, by which a blackish green solid began to be generated.

After the oxidizing agent was added in this manner over 80 minutes, the mixture containing the reaction product was further stirred for 100 minutes under cooling. Thereafter, the resulting solid was subjected to filtration through a No. 2 filter paper (manufactured by Toyo Roshi Kaisha, Ltd.) using a Buechner funnel and a filter flask under reduced pressure to obtain a powder. The powder was stirred and washed in an about 2 mol/L aqueous tetrafluoroboric acid solution using a magnetic stirrer. Next, the powder was stirred and washed several times in acetone and then subjected to filtration under reduced pressure. The resulting powder was vacuum-dried at room temperature (25°C) for 10 hours to obtain 12.5 g of electrically conductive polyaniline including tetrafluoroboric acid as a dopant. This electrically conductive polyaniline was a vivid green powder.

The electrically conductive polyaniline powder in a doped state was put in a 2 mol/L aqueous sodium hydroxide solution, which was stirred in a 3L separable flask for 30 minutes to dedope the electrically conductive polyaniline powder including tetrafluoroboric acid as a dopant through neutralization. The polyaniline dedoped until a filtrate became neutral was washed with water, stirred and washed in acetone, and subjected to filtration using a Buechner funnel and a filter flask under reduced pressure. A dedoped polyaniline powder was obtained on a No. 2 filter paper. This powder was vacuum-dried at room temperature for 10 hours to obtain a polyaniline powder which was brown and in an oxidized-dedoped state. The polyaniline powder had an average particle diameter (D50) of 3 pm. The average particle diameter of the polyaniline powder was calculated using Morphologi G3 manufactured by Malvern Panalytical Ltd.

The oxidation index of the polyaniline powder was determined to be 0.86. The proportion of the polyaniline oxidant determined from a solid-state NMR spectrum was 55 mass% in the whole polyaniline.

10 g (67 parts by mass) of the polyaniline powder (oxidant: 55 mass%) in an oxidized-dedoped state, 2.678 g (18 parts by mass) of an electrically conductive carbon black (Denka Black manufactured by Denki Kagaku Kogyo K.K.) powder as an electrically conductive agent, 1.765 g (12 parts by mass) of styrene-butadiene copolymer as a binder, 22.04 g (3 parts by mass) of sodium carboxymethyl cellulose diluted to 2 mass%, and 13.13 g of water were added, stirred using a planetary centrifugal vacuum mixer (Awatori Rentaro ARV-310 manufactured by THINKY CORPORATION) at 2000 rpm for 10 minutes, and defoamed for 3 minutes. A slurry for forming an active material layer was obtained in this manner. In the styrene-butadiene copolymer, the copolymerization ratio of styrene:butadiene[1,4-form]:butadiene[1,2-form] was 61:31:8. The solids concentration was 30 mass% in the slurry for forming an active material layer.

A slurry for forming an electrically conductive layer according to Example 1 was prepared by mixing and stirring

18 parts by mass of carbon black as electrically conductive particles, 4 parts by mass of styrene-butadiene copolymer (SBR) as a binder, and 78 parts by mass of pure water. In the styrene-butadiene copolymer, the copolymerization ratio of styrene:butadiene was 42:58. The content of the binder in the solids of the slurry for forming an electrically conductive layer was 4% on a mass basis.

A 20-μm-thick aluminum foil was prepared as a current collector. The slurry for forming an electrically conductive layer was applied to one principal surface of the aluminum foil using a bar coater No. 3 to form a coating film. The coating film was dried in an environment at 120°C for 10 minutes to form an electrically conductive layer according to Example 1. An electrically conductive layer-attached current collector according to Example 1 was thus obtained.

With the use of a desktop automatic film applicator (manufactured by Tester Sangyo Co., Ltd.) adjusted to form a 185-μm-thick coating film, a coating film was formed by applying the slurry for forming an active material layer onto the electrically conductive layer at an application speed of 10 mm/s with a doctor blade applicator equipped with a micrometer. The coating film was left at room temperature (25°C) for 45 minutes, and was then dried on a hot plate at a temperature of 100°C to form an active material layer. A positive electrode according to Example 1 was produced in this manner. The active material layer had a thickness of 73 pm.

In a glove box whose environment was maintained at a dew point of -60°C or lower and an oxygen concentration of 1 ppm or less, a separator (manufactured by NIPPON KODOSHI CORPORATION, product name: TF40-50) was placed on a graphite negative electrode sheet equipped with a current collector tab. Next, an electrode including a metal lithium foil attached to a stainless steel mesh equipped with a current collector tab was placed on the separator. The electrode was placed in such a manner that the metal lithium foil was in contact with the separator. This laminate was put in a bag-shaped aluminum laminated film package. The package included a pair of rectangular aluminum laminated films sealed on three sides and having one side open to form an opening. Next, a $LiPF_6$ carbonate solution having a concentration of 1.2 M ($mol/dm^3$) was introduced as an electrolyte solution into the package. This carbonate solution contained ethylene carbonate (EC), ethyl methyl carbonate (EMC), and dimethyl carbonate (DMC) as carbonates. Next, the opening of the package was sealed with the current collector tabs protruded from the opening of the package. A laminate cell for producing a lithium-pre-doped negative electrode was obtained in this manner. Next, this laminate cell was taken out of the glove box. In a constant-temperature chamber maintained at 25°C, three cycles of charge and discharge were carried out in the potential range of 2.0 V to 0.01 V at a current value corresponding to 0.2 C with respect to the capacity of the graphite negative electrode sheet and, at the end, a reaction in which lithium ions were inserted in graphite was carried out until the graphite negative electrode sheet was charged to 75% of its capacity. A laminate cell including a lithium-pre-doped negative electrode sheet was produced in this manner.

The laminate cell including a lithium-pre-doped negative electrode sheet was put in the glove box again. A sealed portion of the laminate cell was cut off to take out the lithium-pre-doped negative electrode sheet. Next, the positive electrode according to Example 1, a separator, and the lithium-pre-doped negative electrode sheet were placed in a stack in such a manner that the separator was located between the positive electrode according to Example 1 and the lithium-pre-doped negative electrode sheet. Anon-woven fabric (manufactured by NIPPON KODOSHI CORPORATION, product name: TF40-50) was used as the separator. The positive electrode was equipped with a current collector tab. Next, the laminate of the positive electrode, the separator, and the negative electrode sheet was put in a bag-shaped aluminum laminated film package. The package included a pair of rectangular aluminum laminated films sealed on three sides and having one side open to form an opening. Next, a $LiPF_6$ carbonate solution having a concentration of 1.2 M ($mol/dm^3$) was introduced as an electrolyte solution into the package. This carbonate solution contained ethylene carbonate (EC), ethyl methyl carbonate (EMC), and dimethyl carbonate (DMC) as carbonates. Next, the opening of the package was sealed with the current collector tab of the positive electrode and the current collector tab of the negative electrode sheet protruded from the opening of the package. A lithium-ion capacitor according to Example 1 was produced in this manner.

<Example 2>

A slurry for forming an electrically conductive layer according to Example 2 was prepared in the same manner as in Example 1, except that the contents of the components were changed so that the content of the binder in the solids of the slurry for forming an electrically conductive layer would be 6% on a mass basis. A positive electrode according to Example 2 was obtained in the same manner as in Example 1, except that the slurry for forming an electrically conductive layer according to Example 2 was used instead of the slurry for forming an electrically conductive layer according to Example 1. A lithium-ion capacitor according to Example 2 was produced in the same manner as in Example 1, except that the positive electrode according to Example 2 was used instead of the positive electrode according to Example 1.

<Example 3>

A slurry for forming an electrically conductive layer according to Example 3 was prepared in the same manner as in Example 1, except that the contents of the components were changed so that the content of the binder in the solids of the slurry for forming an electrically conductive layer would be 10% on a mass basis. A positive electrode according to Example 3 was obtained in the same manner as in Example 1, except that the slurry for forming an electrically conductive layer according to Example 3 was used instead of the slurry for forming an electrically conductive layer according to Example 1. A lithium-ion capacitor according to Example 3 was produced in the same manner as in Example 1, except that the positive electrode according to Example 3 was used instead of the positive electrode according to Example 1.

<Comparative Example 1>

A slurry for forming an electrically conductive layer according to Comparative Example 1 was prepared in the same manner as in Example 1, except that the contents of the components were changed so that the content of the binder in the solids of the slurry for forming an electrically conductive layer would be 2% on a mass basis. A positive electrode according to Comparative Example 1 was obtained in the same manner as in Example 1, except that the slurry for forming an electrically conductive layer according to Comparative Example 1 was used instead of the slurry for forming an electrically conductive layer according to Example 1. A lithium-ion capacitor according to Comparative Example 1 was produced in the same manner as in Example 1, except that the positive electrode according to Comparative Example 1 was used instead of the positive electrode according to Example 1.

(Evaluation of durability)

The lithium-ion capacitors according to Examples and Comparative Example were taken out of the glove box. In a constant-temperature chamber maintained at 60°C, each of the lithium-ion capacitors according to Examples and Comparative Example was subjected to a 500-hour floating test in which a fully charged state (SOC: 100%) was maintained with a maximum voltage of 3.8 V, and the discharge capacity varying over time and the series resistance varying over time were measured.

(Contact angle of water drop)

A water drop was left to stand still on surfaces which were of electrically conductive layers as used in Examples and to which the slurry for forming an active material layer was yet to be applied. The contact angle of a water drop on the surface of each electrically conductive layer was measured according to the sessile drop method in JIS R 3257:1999. The contact angle of a water drop was measured at a temperature of 25°C. A contact angle meter (manufactured by Kyowa Interface Science Co., Ltd., product name: DropMaster DM-301) was used in this measurement.

(Peel strength)

A cutting blade of SAICAS (manufactured by DAIPLA WINTES CO., LTD., product name: DN-20) was pressed at a given rake angle against a surface of the active material layer of a specimen cut out from each of the positive electrodes according to Examples. The cutting blade was moved horizontally with a given load applied to the cutting blade to cut the active material layer. Then, once the cutting blade reached the interface between the active material layer and the electrically conductive layer or the aluminum foil, a diamond cutting blade (manufactured by DAIPLA WINTES CO., LTD., rake angle: 10°) was moved only horizontally to measure a horizontal cutting stress FH. The measurement was carried out in a constant speed mode. The cutting speed was 10 $\mu$m/s. From the results for this measurement, the peel strength P was determined according to the equation (1). The results are shown in Table 1.

As shown in Table 1, the lithium-ion capacitors according to Examples have better durability than that of the lithium-ion capacitor according to Comparative Example 1. The content of the binder in each of the electrically conductive layers of the positive electrodes according to Examples 1 and 2 is higher than that of the positive electrode according to Comparative Example 1. This is considered to be the reason why the lithium-ion capacitors according to Examples have better durability than that of the lithium-ion capacitor according to Comparative Example 1.

[Table 1]

| | Content of binder in electrically conductive layer of positive electrode [mass%] | Evaluation of durability | | | | Contact angle of water drop [°] | Peel strength P [kN/m] |
|---|---|---|---|---|---|---|---|
| | | Discharge capacity A [mAh/g] | | Series resistance [Ω] | | | |
| | | Initial | 500 hours later | Initial | 500 hours later | | |
| Example 1 | 4 | 115 | 89 | 1.0 | 4.5 | 64 | 0.275 |
| Example 2 | 6 | 111 | 89 | 1.1 | 4.5 | 57 | 0.34 |
| Example 3 | 10 | 110 | 92 | 1.8 | 7.6 | 54 | 0.365 |
| Comparative Example 1 | 2 | 116 | 50 | 1.0 | 37.2 | 64 | 0.25 |

## Claims

**1.** A positive electrode for a power storage device, comprising:

an active material layer comprising an electrochemically active polymer and an electrically conductive agent;
a current collector; and
an electrically conductive layer disposed between the active material layer and the current collector and in contact with the active material layer and the current collector, wherein
the electrically conductive layer comprises electrically conductive particles and a binder in contact with outer surfaces of the electrically conductive particles, and
the content of the binder in the electrically conductive layer is 3% or more on a mass basis.

**2.** The positive electrode for a power storage device according to claim 1, wherein the content of the binder in the electrically conductive layer is 10% or more on a mass basis.

**3.** The positive electrode for a power storage device according to claim 1 or 2, wherein the electrically conductive particles comprise a carbon material.

**4.** The positive electrode for a power storage device according to any one of claims 1 to 3, wherein the binder of the electrically conductive layer comprises at least one selected from the group consisting of methylcellulose, hydroxyethyl cellulose, polyethylene oxide, carboxymethyl cellulose, their derivatives, their salts, a polyolefin, natural rubber, a synthetic rubber, and a thermoplastic elastomer.

**5.** The positive electrode for a power storage device according to any one of claims 1 to 3, wherein the binder of the electrically conductive layer comprises at least one selected from the group consisting of a polyolefin, carboxymethyl cellulose, and styrene-butadiene copolymer.

**6.** The positive electrode for a power storage device according to any one of claims 1 to 3, wherein the binder of the electrically conductive layer comprises at least one of carboxymethyl cellulose and styrene-butadiene copolymer.

**7.** The positive electrode for a power storage device according to any one of claims 1 to 6, wherein the electrochemically active polymer particles comprise at least one of polyaniline and a polyaniline derivative.

**8.** The positive electrode for a power storage device according to claim 7, wherein the polyaniline and the polyaniline derivative are dedoped.

**9.** The positive electrode for a power storage device according to claim 7 or 8, wherein the polyaniline and the polyaniline derivative comprises an oxidant of the polyaniline in an amount of 35 to 60% on a mass basis.

**10.** The positive electrode for a power storage device according to any one of claims 1 to 9, wherein the contact angle of a water drop on a surface of the electrically conductive layer is 100° or less.

**11.** The positive electrode for a power storage device according to any one of claims 1 to 10, wherein a peel strength measured for the active material layer with respect to the electrically conductive layer by Surface And Interfacial Cutting Analysis System (SAICAS) is 0.15 kN/m or more.

**12.** The positive electrode for a power storage device according to any one of claims 1 to 11, wherein the active material layer comprises a binder comprising an elastomer.

**13.** The positive electrode for a power storage device according to any one of claims 1 to 12, wherein
the active material layer comprises a biner, and
the sum of a polarity term and a hydrogen bonding term of Hansen solubility parameters of the binder is 20 $MPa^{1/2}$ or less.

**14.** A power storage device, comprising:

an electrolyte layer;
a negative electrode disposed in contact with a first principal surface of the electrolyte layer; and
the positive electrode for a power storage device according to any one of claims 1 to 13 disposed in contact with a second principal surface of the electrolyte layer.

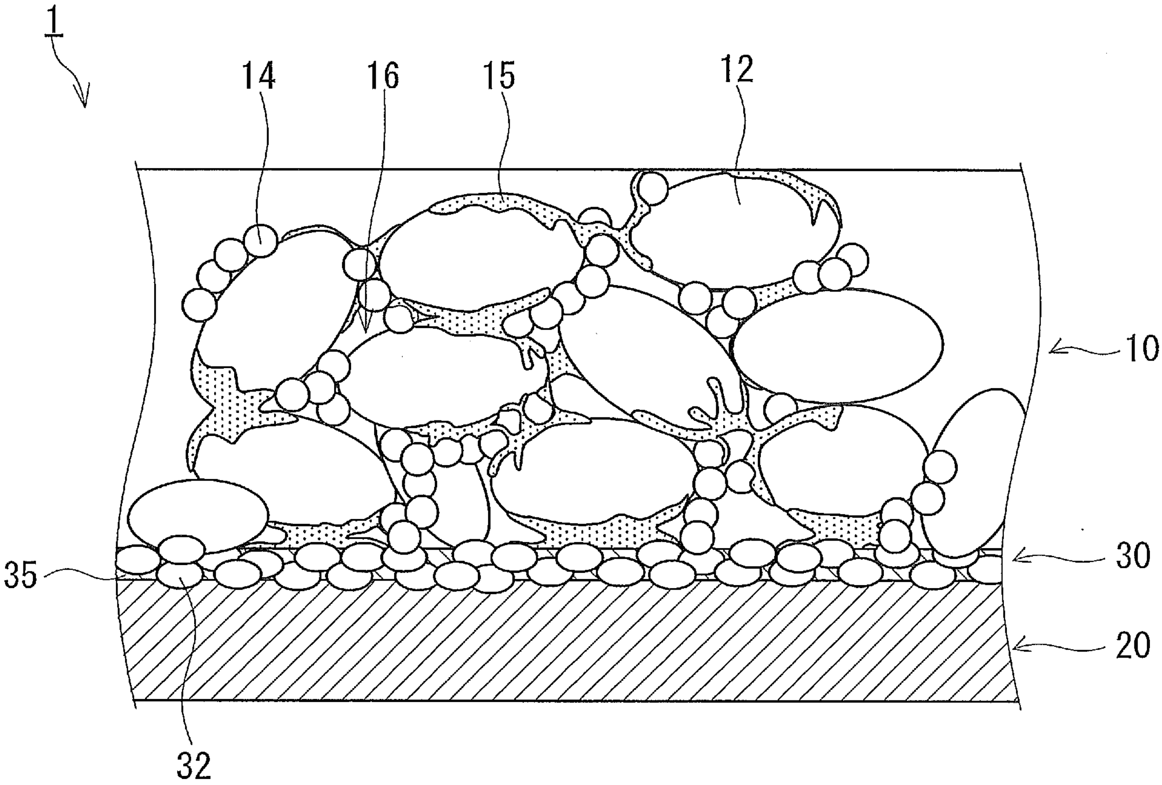


FIG.1

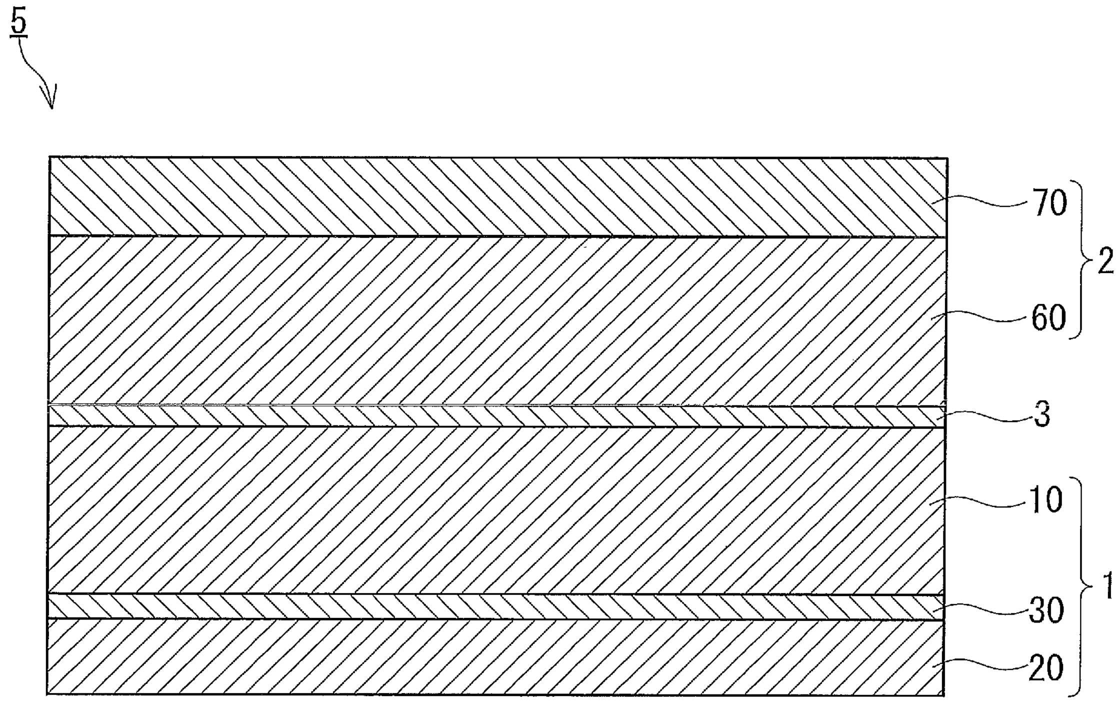


FIG.2

## INTERNATIONAL SEARCH REPORT

International application No. PCT/JP2019/017795

**A. CLASSIFICATION OF SUBJECT MATTER**

Int.Cl. H01G11/28(2013.01)i, H01G11/06(2013.01)i, H01G11/48(2013.01)i, H01M4/137(2010.01)i, H01M4/60(2006.01)i, H01M4/66(2006.01)i

According to International Patent Classification (IPC) or to both national classification and IPC

**B. FIELDS SEARCHED**

Minimum documentation searched (classification system followed by classification symbols)
Int.Cl. H01G11/28, H01G11/06, H01G11/48, H01M4/137, H01M4/60, H01M4/66

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2016-81704 A (TOYO INK SC HOLDINGS CO., LTD.) 16 May 2016, paragraphs [0004]-[0037], [0118]-[0160] (Family: none) | 1-7, 11-12, 14<br>8-10, 13 |
| Y | JP 2014-123449 A (NITTO DENKO CORP.) 03 July 2014, paragraph [0075] (Family: none) | 8-10, 13 |
| Y | JP 2015-170739 A (FUNAI ELECTRIC CO., LTD.) 28 September 2015, paragraph [0030] (Family: none) | 8-10, 13 |
| Y | WO 2018/021513 A1 (NITTO DENKO CORP.) 01 February 2018, paragraphs [0020], [0036] & EP 3477746 A1, paragraphs [0020], [0037] & CN 109496372 A | 9-10, 13 |
| Y | JP 2016-197596 A (UACJ CORPORATION) 24 November 2016, paragraphs [0015], [0026] (Family: none) | 10 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 July 2019 (17.07.2019) | 30 July 2019 (30.07.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018026341 A


### Non-patent literature cited in the description


- **CHARLES M. HANSEN.** Hansen Solubility Parameters: A Users Handbook. CRC Press, 2007